# EUROPEAN PATENT SPECIFICATION

(11) **EP 0 686 501 B1**
(45) Date of publication and mention of the grant of the patent: **24.11.1999**
(21) Application number: 95103715.9
(22) Date of filing: 15.03.1995
(51) Int. Cl.: B32B 31/12, B32B 15/08, B05D 7/14

(54) **A process for multilayer coating sheet metal strips in coil or plate form, and thus obtained product**
Verfahren zum Auftragen eines mehrschichtigen Überzuges auf Metallstreiven in Form von Spulen oder Platten,sowie hergestelltes Produkt
Procédé d'application sur des bandes métalliques en forme de bobine ou plaque d'un revêtement multicouche et produit ainsi obtenu

(30) Priority: 12.05.1994 IT MI940945
(43) Date of publication of application: 13.12.1995
(73) Proprietor: SIQUAM S.P.A., I-20090 Caleppio di Settala Mi (IT)
(72) Inventor: Beranger, Mario, I-20075 Lodi (LO) (IT)
(74) Representative: Klausner, Erich

(56) References cited:
- EP-A- 0 067 060
- EP-A- 0 312 304
- EP-A- 0 386 986
- EP-A- 0 608 632
- WO-A-86/01772
- WO-A-94/19113
- DATABASE WPI Week 8535 Derwent Publications Ltd., London, GB; AN 85-214222 & JP-A-60 137 642 (KISHIMOTO A) , 22 July 1985

## Description

The present invention relates to a process for the application of a mixed multilayer coating, paint plus film, to sheet metal strips in coil or plate form, viz. for the coil or sheet coating process. It is well known in the art that coil coating is one of the most up-to-date and technologically advanced methods for the continuous production of precoated metal laminates.

Various coil coating processes have been known and used for a long time. For example, in the case of painting as such, a roll of sheet metal is unrolled as it is fed to a painting line. After having been subjected to the appropriate pretreatment operations, the sheet metal is caused to pass through the painting station where a first pain coat is applied onto one side or both sides of the strip. The painting operation consists of applying, usually by roll coating, doctor blade coating, curtain coating or sometimes (especially in the case of powder paint) spray coating, a thermosetting or thermoplastic painting composition, in either liquid or powder form. Usually, this first layer acts as an anchoring layer or primer. The thus treated sheet is fed to an oven wherein the resin is cured, whereupon, at the exit from the oven, the strip is first air cooled, then water cooled. Thereafter, said cooled strip is made to pass through a second painting station for the application of the finish coat, followed by the entry into a second oven for curing the second paint layer and at the exit it is cooled as above. After entering the exit accumulator, the painted strip is checked and rewound.

According to another coil coating method, instead of using a painting process as briefly described above, the metal laminates can be coated with coloured plastic material films durably bonded to the metal support by means of a suitable adhesive. This durable bonding is obtained through the combined action of heat and lamination pressure.

Also this process starts with a roll of sheet metal that is unrolled and subjected to the appropriate pretreatment operation, followed by the application of an adhesive layer, whereafter the sheet metal with the adhesive coating is fed into an oven and baked at a peak metal temperature (P.M.T.) of from 160°C to 220°C; at the exit from the oven it is continuously adhesively coupled with the plastic film, followed by lamination by means of a pressing calender.

According to the type of sheet metal (e.g. a place of cold-rolled or zinc-plated steel or aluminium), a primer is applied in order to obtain a greater corrosion resistance or an improved adhesive anchorage, which primer is also oven-dried before an adhesive is applied thereto.

In the coil coating field, the measured temperature, owing to the short oven dwelling times of the material under treatment (normally 10-60 seconds), is not the inner space temperature of the oven, but the one (peak metal temperature : P.M.T.) which is detected by means of optical pyrometers in the terminal zones of oven, so as to ensure that said material reaches the required temperature values.

The coloured films generally used for this purpose are based on polyvinyl fluoride (PVF), vinyl materials, especially polyvinyl chloride (PVC), and acrylic materials (thermoplastics). The PVC-based films are the most frequently used ones because they are available in a wide range of formulations, colours and surface appearance for selecting the most suited ones for the end use.

Known, furthermore, is also a process for the two-step application of a "mixed" multilayer (paint plus clear plastic film). In the first step, one or more paint layers are applied according to one of the above described methods. The thus coated metal strip, after oven curing and subsequent cooling, is fed to a further painting station wherein a suitable adhesive is applied, onto which, after passing through an oven, a clear film is pressure-applied.

The coatings obtained by means of one of the first described painting processes usually exhibit good mechanical, durability and chemical resistance characteristics. However they are not very suitable when a high flexibility coupled to a high hardness degree is required. Moreover, the staining resistance is not very satisfactory and the final gloss does not usually reach values higher than 90-92 gloss, as determined at 60°, according to the A.I.C.C. method No. 7 (A.I.C.C. = Associazione Italiana Coil Coating - Italian Coil Coating Association). This method is equivalent to the A.S.T.M. D523 and the ECCA T2 methods.

On the other hand, the coatings of the second type, the so-called laminated film coatings, have aesthetical and hardness limitations; moreover, the coatings based on PVC film might in the near future be banned for environmental and recyclability reasons.

Finally, the last described mixed process allows precoated metal laminates to be obtained that are markedly better than those obtainable with the other two processes but said process has the drawback of being considerably more expensive since it involves a dual processing step (i.e. the application first of the paint and secondly of the adhesive).

There was therefore the need to devise a process for manufacturing precoated multilayer metal laminates whereby to obtain a product having in all the same as or better characteristics than those that can be obtained with the above-mentioned two-step mixed process, at a decidedly lower cost.

It is therefore an object of the present invention to provide a cost-effective process for the multilayer, paint/coating film coating, of sheet metal rolls or plates, in a single step, on a conventional two-oven coil coating line.

The present invention refers to a process for the application of a mixed multilayer coating, paint plus film, to sheet metal, wherein said sheet metal, after having been subjected to the conventional pretreatment operations, is coated with a layer of paint having adhesive properties, which paint coating is thereafter activated in a oven at a temperature (P.M.T.) of from 200 to 230°C and, at the exit from the oven, a plastic clear film is applied under pressure to the painted metal strip, characterised in that:
said paint having adhesive properties comprises a polyester resin with hydroxyl functional groups, a melamine resin and/or a blocked isocyanate;
said sheet metal is coated with the layer of paint having adhesive properties, so as to provide a thickness of the dried paint coating of 15-40 µm, when the paint is in liquid form or 20-60 µm when the paint is in the form of a powder;
said plastic clear film is a polyethylene terephthalate film, coextruded with an adhesive component, having a thickness of 10-50 µm.

Optionally before coating with the layer having adhesive properties, onto the pretreated metal strip a primer, having a dry thickness of 5-50 µm, can be applied followed by heating in a oven at a temperature (P.M.T.) of from 210 to 240°C, and cooled.

Another object of the present invention is the process as reported above for the application of a mixed multilayer coating, paint plus film, to sheet metal for outdoor use, wherein said paint having adhesive properties contains anticorrosive pigments, said sheet metal is coated with the layer of paint having adhesive properties, so as to provide a thickness of the dried paint coating of 10-30 µm, and a layer of weatherproff pigmented paint is applied, after cooling, onto the polyethylene terephtalate clear film, with a dry thickness of 10-30 µm and dried in an oven at a temperature (P.M.T.) of from 220 to 240°C.

More precisely, the process of the invention consists of using a special pigmented colour-coat or clear-coat paint (in liquid or powder form) having adhesive properties with respect to the top coat. In this way it becomes possible to obtain in a single step a multilayer coating comprising a possibly pigmented paint and a clear coating film.

According to the inventive process, the above-mentioned paint accomplishes two distinctly different tasks:
(a) imparting the basic characteristics and colour (typical functions of a conventional paint);
(b) acting as a durable anchoring agent for the top coat.

A subsequent step for the application of the adhesive is therefore no longer needed. This is the core of the invention.

The multilayer coatings obtained with the process of the present invention exhibit excellent characteristics, in particular:
(a) a very appealing aesthetic appearance such as image depth and a specular surface;
(b) a very high gloss, usually higher than 100, as measured according to the method A.I.C.C. No. 7 (equivalent to A.S.T.M. D523 and ECCA T2);
(c) an extremely hard top surface, of greater hardness than 2H, as measured according to the method A.I.C.C. No. 11 (equivalent to A.S.T.M. D3363 and ECCA T4).
(d) a stain-proof surface, suited also for contact with food-stuff;
(e) an excellent cleansing facility; stains of any kind (even paint) can be removed by solvent cleaning alcohols or ketones) leaving no trace or mark on the coated film. The inventive laminates can therefore be used as anti-graffiti surfaces;
(f) a total absence of microcrackings when the metal support is subjected to very severe bending or deformation;
(g) a very high resistance to chemicals, be it for the intrinsic nature of the system, be it for the absence of microcrackings after processing;
(h) a very good weatherability in case special films are used or the reverse layer cycle is applied (see Example 3).

The process of the invention has shown to be very versatile also as far as the multilayer coating application method is concerned. In fact, the coating can be applied by the coil coating, sheet coating, powder prepainting method or by any other method wherein, once the paint has been applied and subsequently baked, a film can be directly applied thereonto by means of calendering. According to a preferred method, after carrying out the usual pre-treatment operations on the metal surface to be coated a primer is applied onto the metal strip on a conventional coil coating line having two application stations and two drying ovens, said primer being dried in a first oven, followed by the application of the pigmented paint with adhesive properties as described above, which is activated in the second oven, and finally a clear coating film is calendered thereonto.

According to another preferred method of the present invention, the pigmented paint with adhesive properties can be applied directly onto the metal strip, without any primer, whereupon it is activated by heating in an oven, and a clear coating film is applied onto the so activated paint, said application being carried out by calendering, which film is thereafter coated with a pigmented paint layer and dried in a second oven.

According to the present invention the clear film used in the process of claim 1 is polyethylene terephthalate (PET) having a thickness of 10 - 50 µm.

The adhesive paint used in the inventive process contains a binder consisting of an oil-free polyester resin, a melamine resin and/or a blocked isocyanate, said polyester resin having hydroxyl functional groups that can at least in part react with the isocyanate groups of the polyisocyanate or with the melamine resin. Besides consisting of polyester resin, the binder with hydroxyl functional groups can also consist of other resins, such as, e.g., polyols, polyethers, polyacrylates, polyglycols, and of other film-forming polymers having hydroxyl groups.

Preferably, the binder with hydroxyl functional groups consists of a high molecular weight saturated polyester combined with minor amounts of melamine resins and/or blocked isocyanates. Preferred among the above-mentioned polyesters are linear saturated polyesters with a molecular weight of from 10,000 to 25,000 having a glass transition temperature (Tg) of from 40°C to 70°C to a hydroxyl number (OHN) of from 5 to 10, expressed as mg/KOH.

The blocked polyisocyanates useful for the paints with adhesive properties, suitable for the inventive process, can be aliphatic, cycloaliphatic, and also aromatic. Yet aliphatic and cycloaliphatic polyisocyanates are particularly suitable.

As already pointed out in our co-pending application, MI 94A000946, corresponding to EP-A-682096, of even date, titled "Paints with adhesive properties for the multilayer coating of sheet metal, and their use", the term "polyisocyanate" refers mainly to "diisocyanates" although the polyisocyanate molecule may contain more than 2 isocyanate groups, as in the case of triisocyanates and tetraisocyanates. As it is known to the skilled artisan, the blocked isocyanates are freely available in he marketplace. Preferably, the blocking agents are oximes or caprolactam.

Useful solvents for preparing the adhesive paint are those commonly used in this field and are selected, e.g., from the class of aromatic hydrocarbons, esters, ethers and ketones. The solvents should obviously be capable of dissolving all the organic components of the paint. Especially preferred solvents are the ones selected from the class of high-boiling aromatic hydrocarbons, esters and glycols.

Besides the above-mentioned ingredients, the adhesive paint can contain inorganic or organic pigments, pigmenting dyestuffs and any of the processing aids and/or additives commonly used in the art of coil coating paints.

Obviously, the paint can also not contain any pigment or dyestuff at all when a clear coating is desired in order to highlight the underlying metal.

The present invention will now be better illustrated by means of some working examples.

### Example 1

Operating on a conventional painting line for coil coating, the roll of sheet steel is unrolled and the planar strip is thereafter subjected to a conventional pretreatment step comprising the following operations: degreasing, brushing and chemical conversion (phosphatizing and chromating). The steel strip is then rinsed and subjected to passivation.

After drying, the strip is roll-coated with a primer to a dry thickness of about 5 - 20 µm, according to the primer composition and the desired final appearance. The primer is then dried in an oven at a temperature (P.M.T.) of from 210 to 240°C. After cooling and drying, the liquid adhesive paint is applied by roll coating in such an amount as to obtain a fry thickness of the paint coating of about 20 µm. The paint is then activated in the oven at a temperature (P.M.T.) of from 200 to 230°C.

At the exit from the oven, a clear film of coextruded polyester (PET) and polyvinylidene chloride (PVdC) having a thickness of about 15 µm is applied by calendering onto the thus painted sheet strip. The inner PVdC layer promotes a durable bond between said film and the adhesive paint. Alternatively can be used a polyester film suitably coextruded with an adhesive component on the inner side. The thus obtained laminate is cooled to room temperature by means of air and a water shower.

The same method can be applied, besides to the steel laminates, to the preparation of laminates of aluminium, zinc-plated steel, Galfan, and other metal strips.

Moreover, the application of the liquid paint can be carried out by using any other painting method such as, e.q., doctor blade coating spray coating, or by means of a curtain painting method.

### Example 2

In this example, the production of plate metal laminates with powder adhesive paint (sheet coating) is described. Zinc plated sheet steel plates are subjected to a conventional chemical conversion treatment. The powder adhesive paint is thereafter applied by means of electrostatic, in one or more steps, until a dry thickness of the paint coating of about 30 - 50 µm is obtained. After adequate drying of the paint coating, the so coated strip is fed to an oven and baked at a temperature (P.M.T.) of from 200 to 220°C. At the exit from the oven, to the thus obtained plates a clear film of coextruded polyester (PET) is applied by means of calendering, said film being similar to the one employed in Example 1, having a thickness of about 15 µm . The thus obtained laminate is then cooled to room temperature by air and by a water shower.

In the same way aluminium or steel strips can be laminated. Obviously, especially in the latter case, before the chemical conversion a degreasing and/or brushing pretreatment of the metal strip may be required.

### Example 3

### (reverse layer cycle)

Operating as described in the previous examples, the metal strip is subjected to the conventional pretreatment operations. Thereafter, an adhesive paint coating is applied, said adhesive paint having previously been added with pigments exhibiting anticorrosion characteristics such as, e.g., strontium chromate, zinc phosphate and the like. The dry thickness of the paint coating is about 20 µm . The paint is then activated in an oven at a temperature (P.M.T.) of from 200 to 230°C.

At the exit from the oven, a coextruded polyester (PET) film similar to that of Example 1, having a thickness of about 15 µm, is applied by calendering to the so painted metal strip. After cooling, a pigmented paint coating having special weathering resistance characteristics is applied to the outer side of the polyester film. The dry thickness of this paint coating is of about 15-20 µm. The laminate is then fed through a drying oven at a temperature (P.M.T.) of from 220 to 240°C.

Adhesive paints useful for implementing the coating process of the present invention are exemplified in the above-referred co-pending patent application No. MI94A000946, corresponding to EP-A-682096.

Hereinafter the main characteristics of prior art coatings are synoptically compared with those of the multilayer coatings as obtained with the process of the present invention.

| | **Prior Art coating** | **Multilayer coatings of the invention** |
|---|---|---|
| Layer thickness | 20-50 µm | 30-100 µm |
| Gloss A.I.C.C. No. 7 (A.S.T.M. D523; ECCA T2) | 92 gloss max | >100 gloss |
| Pencil hardeness A.I.C.C. No. 11 (A.S.T.M. D3363; ECCA T4) | F-H | 2-3 H |
| t-BEND TEST A.I.C.C. No. 12 (ECCA T7) | 1-3 t | O T |
| Solvent resistance: 5 min. immersion in MEK | poor | the layer remains unaltered |
| Staining resistance | poor | very good |
| Graffiti cleansability | very difficult or impossible | very easy |
| Detergent resistance | good | very good |
| 20% sheet elongation | 60% gloss loss | 15-20% gloss loss |

## Claims

1. A process for the application of a mixed multilayer coating, paint plus film, to sheet metal, wherein said sheet metal, after having been subjected to the conventional pretreatment operations, is coated with a layer of paint having adhesive properties, which paint coating is thereafter activated in an oven at a peak metal temperature of from 200 to 230°C and, at the exit from the oven, a plastic clear film is applied under pressure to the painted metal strip, characterised in that:
said paint having adhesive properties comprises a polyester resin with hydroxyl functional groups, a melamine resin and/or a blocked isocyanate;
said sheet metal is coated with the layer of paint having adhesive properties, so as to provide a thickness of the dried paint coating of 15-40 µm, when the paint is in liquid form, or 20-60 µm when the paint is in the form of a powder;
said plastic clear film is a polyethylene terephthalate film coextruded with an adhesive component, having a thickness of 10-50 µm.

2. A process according to claim 1, wherein onto the pretreated metal strip a primer, having a dry thickness of 5-50 µm, is applied followed by heating in an oven at a peak metal temperature of from 210 to 240°C, and cooled.

3. A process according to claim 1 for the application of a mixed multilayer coating, paint plus film, to sheet metal for outdoor use, wherein said paint having adhesive properties contains anticorrosive pigments, said sheet metal is coated with the layer of paint having adhesive properties, so as to provide a thickness of the dried paint coating of 10-30 µm, and a layer of weatherproof pigmented paint is applied, after cooling, onto the polyethylene terephthalate clear film, with a dry thickness of 10-30 µm and dried in an oven at a peak metal temperature of from 220 to 240°C.

## Patentansprüche

1. Verfahren zum Auftragen einer gemischten, viellagigen Beschichtung, Farbe und Film, auf ein Metallblech, wobei das Metallblech, nachdem es herkömmlichen Vorbehandlungsdurchgängen unterzogen wurde, mit einer Farbschicht mit klebenden Eigenschaften beschichtet wird, wobei die Farbbeschichtung danach in einem Ofen bei einer Spitzenmetalltemperatur von 200 bis 230 °C aktiviert wird und beim Austritt aus dem Ofen ein klarer Plastikfilm unter Druck auf den gefärbten Metallstreifen aufgetragen wird, dadurch gekennzeichnet, daß:
die Farbe mit klebenden Eigenschaften ein Polyesterharz mit funktionellen Hydroxylgruppen, bin Melaminharz und/oder ein Blockisocyanat umfaßt;
das Metallblech mit der Farbschicht mit klebenden Eigenschaften so beschichtet wird, um eine Dicke der Farbbeschichtung im trockenen Zustand von 15-40 µm zu liefern, wenn die Farbe in flüssiger Form vorliegt, oder von 20-60 µm, wenn die Farbe in Pulverform vorliegt;
der klare Plastikfilm ein Polyethylenterephthalatfilm mit einer Dicke von 10-50 µm ist, der mit einem klebenden Bestandteil koextrudiert wurde.

2. Verfahren nach Anspruch 1, wobei auf den vorbehandelten Metallstreifen eine Grundierung mit einer Dicke im trockenen Zustand von 5-50 µm aufgetragen wird, gefolgt von Erhitzen in einem Ofen bei einer Spitzenmetalltemperatur von 210 bis 240 °C, und wobei dann abgekühlt wird.

3. Verfahren nach Anspruch 1 zum Auftragen einer gemischten, viellagigen Beschichtung, Farbe und Film, auf ein Metallblech zur Verwendung im Freien, wobei die Farbe mit klebenden Eigenschaften antikorrosive Pigmente enthält, wobei das Metallblech mit der Farbschicht mit klebenden Eigenschaften zur Lieferung einer Dicke der getrockneten Farbbeschichtung von 10-30 µm beschichtet wird, und nach dem Abkühlen auf den klaren Polyethylenterephthalatfilm eine Schicht verwitterungsbeständiger, pigmentierter Farbe mit einer Dicke im trockenen Zustand von 10-30 µm aufgetragen und in einem Ofen bei einer Spitzenmetalltemperatur von 220 bis 240 °C getrocknet wird.

## Revendications

1. Procédé pour l'application d'un revêtement multicouche mixte, peinture plus film, sur une tôle métallique, dans lequel ladite tôle, après avoir été soumise aux opérations classiques de prétraitement, est recouverte d'une couche de peinture présentant des propriétés adhésives, lequel revêtement de peinture est ensuite activé dans un four à une température de pic métallique de 200 à 230°C et, à la sortie du four, un film plastique transparent est appliqué sous pression sur la bande métallique peinte, caractérisé en ce que :
ladite peinture présentant des propriétés adhésives comprend une résine polyester avec des groupements fonctionnels hydroxyle, une résine de mélamine et/ou un isocyanate bloqué;
ladite tôle est recouverte de la couche de peinture présentant des propriétés adhésives, de manière à procurer une épaisseur du revêtement de peinture séché de 15-40 µm, lorsque la peinture est liquide ou de 20-60 µm lorsque la peinture est pulvérulente,
ledit film de plastique transparent est un film de polyéthylène téréphtalate, coextrudé avec un composant adhésif, ayant une épaisseur de 10-50 µm.

2. Procédé suivant la revendication 1, dans lequel sur la bande métallique prétraitée, un apprêt ayant une épaisseur sèche de 5-50 µm, est appliqué suivi d'un chauffage dans un four à une température de pic métallique de 210 à 240°C, et refroidi.

3. Procédé suivant la revendication 1, pour l'application d'un revêtement multicouche mixte, peinture plus film, sur une tôle pour une utilisation à l'extérieur, dans lequel ladite peinture présentant des propriétés adhésives contient des pigments anticorrosion, ladite tôle est recouverte de la couche de peinture présentant des propriétés adhésives, de manière à procurer une épaisseur de revêtement de peinture séché de 10-30 µm, et une couche de peinture pigmentée résistant aux intempéries est appliquée, après refroidissement sur le film de polyéthylène téréphtalate transparent, avec une épaisseur sèche de 10-30 µm et séchée dans un four à une température de pic métallique de 220 à 240°C.
